# EUROPEAN PATENT SPECIFICATION

(11) **EP 2 993 759 B1**
(45) Date of publication and mention of the grant of the patent: **10.04.2019**
(21) Application number: 15794443.0
(22) Date of filing: 10.02.2015
(51) Int. Cl.: H02J 3/32, H02J 9/06, B60L 11/18, H02J 7/00, H02J 9/00, H02J 9/04

(54) **COMMERCIAL POWER SUPPLY METHOD AND DEVICE**
INDUSTRIENETZSTROMVERFAHREN UND -VORRICHTUNG
PROCÉDÉ ET DISPOSITIF D'ALIMENTATION ÉLECTRIQUE COMMERCIALE

(30) Priority: 28.05.2014 CN 201410229059
(43) Date of publication of application: 09.03.2016
(73) Proprietor: Huawei Technologies Co., Ltd., Longgang District Shenzhen, Guangdong 518129 (CN)
(72) Inventor: CAI, Bing, Shenzhen Guangdong 518129 (CN); WANG, Fuchao, Shenzhen Guangdong 518129 (CN)
(74) Representative: Thun, Clemens
(86) International application number: PCT/CN2015/072671
(87) International publication number: WO 2015/180514

(56) References cited:
- CN-A- 102 437 584
- CN-A- 102 868 205
- CN-A- 103 545 844
- CN-U- 203 423 531
- JP-A- 2013 255 360
- US-A1- 2010 017 045
- US-A1- 2014 088 781

## Description

### TECHNICAL FIELD

The present invention relates to the field of electric system technologies, and in particular, to a mains supply method and an apparatus.

### BACKGROUND

With an increasingly serious energy crisis and a gradually strengthened environmental consciousness of people, clean-energy powered vehicles have widely developed and have been extensively promoted and applied, and in particular, a technology for developing electric automobiles is the most mature.

At present, electric automobiles are mainly charged by a mains supply system. With an increasing quantity of electric automobiles, a problem brought about is that: if a quantity of electric automobiles that need charging at the same time is too large, a serious burden to the mains may be caused; if electricity demands of the electric automobiles that need charging at the same time and electricity demands of a load of the mains supply system exceed maximum load of the mains, a mains failure may occur. In order to solve this problem, a method adopted at present is adding energy storage devices to relieve an impact of charging of electric automobiles on the mains, where the energy storage devices are used to assist the mains in satisfying electricity demands of electric automobiles. A defect of such a method is that when the mains failure occurs, if electric energy stored in the energy storage device is insufficient, some critical loads may be interrupted due to lack of timely electricity supply, which may cause a great economic loss. The so-called critical load refers to a load that needs to work uninterruptedly, that cannot have an electricity failure in midway, or whose electricity failure in midway may cause a huge loss, for example, a data center and a server room. These loads need to work uninterruptedly and cannot have an electricity failure in midway. If an electricity failure occurs in midway, a great amount of data information may be lost due to lack of timely storage, which seriously affects people's daily work and life.

US 2010/017045 A1 relates to a system having a building control system with a vehicle battery controller. The vehicle battery controller may be configured to control a vehicle battery charge and a vehicle battery discharge of a vehicle having a vehicle battery coupled to an electrical system of a building.

US 2014/088781 A1 includes control methods employed in multiphase distributed energy storage systems that are located behind utility meters typically located at, but not limited to, medium and large commercial and industrial locations. Some embodiments of the invention use networked multiphase distributed energy storage systems located at an electric load location or installed at interconnection points along the electric power distribution grid to provide a means for balancing the load created from an electric charging station, which are adapted to transfer power between one or more electric vehicles and the electric power grid.

### SUMMARY

The present invention provides a mains supply method and an apparatus, which are used to improve working stability of a critical load upon a mains failure.

In a first aspect a mains supply method is provided, wherein the method comprises:
- upon a mains failure, detecting whether a quantity of remaining electricity of a backup mains supply system is less than a preset value, wherein the preset value is preset according to a quantity of electricity required for a critical load of a mains supply system to work properly for a time T, and the preset value is less than a maximum quantity of backup electricity of the backup mains supply system;
- when the quantity of remaining electricity of the backup mains supply system is less than the preset value, controlling the backup mains supply system to supply electricity to the critical load, and detecting whether a quantity of feedable electricity of an electric vehicle of the mains supply system is greater than zero, wherein the quantity of feedable electricity of the electric vehicle of the mains supply system refers to a maximum quantity of electricity that can be provided for the critical load by all electric vehicles that use mains as a charging source and are being charged; and

- if the quantity of feedable electricity of the electric vehicle of the mains supply system is greater than zero, controlling one or more electric vehicles that can provide a quantity of feedable electricity to supply electricity to the critical load,
characterized in that
the method further comprises:
- when the mains works properly, if threshold power of the mains is greater than or equal to electricity supply power required by loads of the mains supply system, and the threshold power of the mains is less than a sum of the electricity supply power required by the loads of the mains supply system and charging power required by the electric vehicle of the mains supply system, detecting whether the quantity of remaining electricity of the backup mains supply system is greater than the preset value, wherein the loads of the mains supply system comprise the critical load and another device that needs the mains to provide electricity supply power, excluding the electric vehicle; and
- if the quantity of remaining electricity of the backup mains supply system is greater than the preset value, controlling the backup mains supply system to supply electricity to the one or more electric vehicles, wherein a quantity of electricity provided by the backup mains supply system to the one or more electric vehicles does not exceed a difference between the quantity of remaining electricity of the backup mains supply system and the preset value.

In a first implementation form of the first aspect the method further comprises:
when the quantity of remaining electricity of the backup mains supply system is greater than or equal to the preset value, controlling the backup mains supply system to supply electricity to the critical load.

In a second implementation form of the first aspect the controlling one or more electric vehicles that can provide the quantity of feedable electricity to supply electricity to the critical load comprises:
controlling the one or more electric vehicles that can provide a quantity of feedable electricity to supply electricity to the backup mains supply system, and controlling the backup mains supply system to supply electricity to the critical load; or
controlling the one or more electric vehicles that can provide a quantity of feedable electricity to directly supply electricity to the critical load.

In a third implementation form of the first aspect the method further comprises:
if the quantity of remaining electricity of the backup mains supply system is less than or equal to the preset value, reducing a quantity of charging electricity required by the electric vehicle, so that a quantity of supplied electricity of the mains can afford a quantity of supplied electricity required by the load of the mains supply system and the quantity of charging electricity required by the electric vehicle of the mains supply system.

In a second aspect a mains supply apparatus configured and intended to perform any of the above methods is provided.

It may be learned that, according to the mains supply method and the apparatus provided in the present invention, upon a mains failure, it is first detected whether a quantity of backup electricity of a backup mains supply system is greater than a preset value, where if the quantity of backup electricity of the backup mains supply system is greater than the preset value, the backup mains supply system can independently support a critical load of a mains supply system to work for a time T; on the contrary, if the quantity of backup electricity of the backup mains supply system is less than a second preset value, that is, the backup mains supply system cannot independently support a critical load of the mains supply system to work for the time T, it is detected whether a quantity of feedable electricity of an electric vehicle of the mains supply system is greater than zero, and when the quantity of feedable electricity of the electric vehicle is greater than zero, the electric vehicle is controlled to supply electricity to the critical load and assist the backup mains supply system in supplying electricity to the critical load, so as to ensure that, after the mains failure, the critical load is kept working properly as much as possible to wait for the mains to restore, thereby reducing a serious loss caused by the failure of the critical load as much as possible. According to the technical solutions provided in the present invention, a quantity of electricity between the backup mains supply system and the electric vehicle of the mains supply system is scheduled. In this way, upon a mains failure, the critical load is kept working properly to the most extent. Therefore, using solution can improve working stability of the critical load.

### BRIEF DESCRIPTION OF DRAWINGS

To describe the technical solutions in the present invention more clearly, the following briefly introduces the accompanying drawings required for describing the invention or the prior art.
FIG. 1 is a schematic diagram of an application scenario of the mains supply method according to the present invention;
FIG. 2a is a schematic flowchart of a mains supply method according to the present invention;
FIG. 2b is a schematic flowchart of the mains supply method according to the present invention;
FIG. 2c is a schematic flowchart of the mains supply method according the present invention;
FIG. 3 is a schematic structural diagram of a mains supply apparatus according to the present invention; and
FIG. 4 is a schematic structural diagram of a control device according to the present invention.

### DESCRIPTION OF EMBODIMENTS

To make the objectives, technical solutions, and advantages of the present invention clearer, the following clearly and completely describes the technical solutions of the present invention with reference to the accompanying drawings.

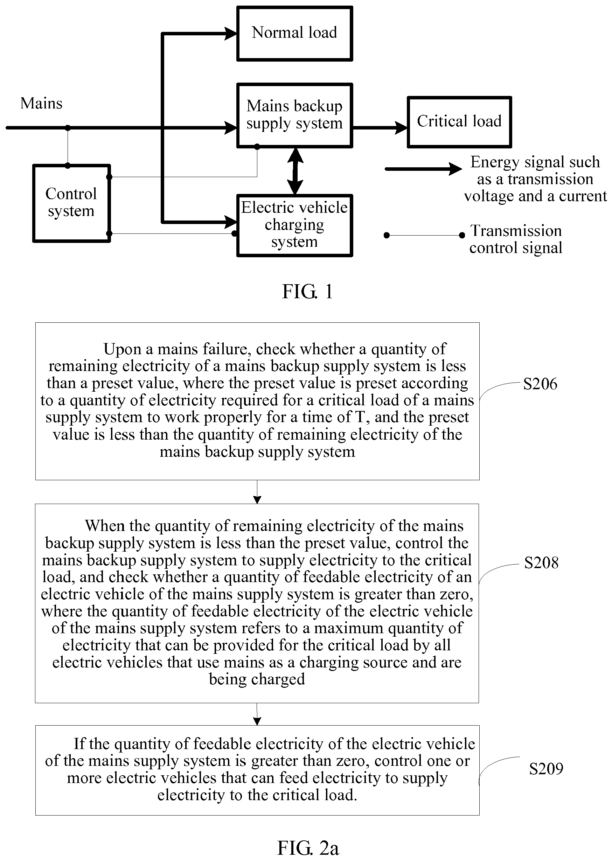

Firstly, refer to FIG. 1, which is a schematic diagram of an application scenario of a mains supply method according to the present invention. Specifically, mains input supplies electricity to a normal load (Normal Load), a critical load (Critical Load), an energy storage apparatus (that is, a backup mains supply system), and an electric vehicle charging system, where the mains input is alternating current input. Mains supply is directly output to the normal load; after being converted into a direct current by an/a AC/DC converter, the mains supply is output to the backup mains supply system, and the direct current is then output to the critical load after being converted into an alternating current by another AC/DC converter; the mains is output to the electric vehicle charging system after being converted into the direct current by the AC/DC converter; and another end of the electric vehicle charging system is connected to the backup mains supply system, which is configured to receive electricity supply from the backup mains supply system or supply electricity to the backup mains supply system.

With reference to FIG. 1, if mains work properly and threshold power of the mains is greater than or equal to electricity supply power required by the normal load, electricity supply power required by the critical load, and charging power required by the electric vehicle charging system, a control system shown in FIG. 1 controls the mains to supply electricity to the normal load, the critical load and the electric vehicle charging system, and in addition, charges the backup mains supply system.

If the mains work properly but the threshold power of the mains is only greater than or equal to the electricity supply power required by the normal load and the critical load and is less than a sum of the electricity supply power required by the normal load and the critical load and the charging power required by the electric vehicle charging system, the control system controls the backup mains supply system to provide a quantity of remaining electricity to the electric vehicle charging system when it is ensured that, upon a mains failure, the backup mains supply system can keep the critical load to work properly for a time T.

If a mains failure occurs, the control system controls the backup mains supply system to supply electricity to the critical load; if a quantity of electricity of the backup mains supply system is not enough to support the critical load to work properly for the time T, further detect a quantity of feedable electricity of the electric vehicle charging system; and when the quantity of feedable electricity of the electric vehicle charging system is greater than zero, control the electric vehicle charging system to assist the backup mains supply system in supplying electricity to the critical load, so as to ensure that, upon the mains failure, the critical load can work properly for a time as long as possible.

FIG. 2a is a schematic flowchart of the mains supply method according to the present invention, and specifically includes the following steps:
S206. Upon a mains failure, detect whether a quantity of remaining electricity of a backup mains supply system is less than a preset value, where the preset value is preset according to a quantity of electricity required for a critical load of a mains supply system to work properly for a time T, and the preset value is less than a maximum quantity of backup electricity of the backup mains supply system.

An example is used to illustrate a relationship between the detected quantity of remaining electricity of the backup mains supply system, the preset value, and the maximum quantity of backup electricity of the backup mains supply system. For example, a second preset value accounts for 60% of the maximum quantity of backup electricity of the backup mains supply system, and if the detected quantity of remaining electricity of the backup mains supply system accounts for 20% of the maximum quantity of backup electricity of the backup mains supply system, the quantity of remaining electricity of the backup mains supply system is less than the preset value.

It should be noted that, the critical load refers to a load that needs to work uninterruptedly, that cannot have an electricity failure in midway, or whose electricity failure in midway may cause a huge loss, for example, a data center and a server room. These loads need to work uninterruptedly and cannot have an electricity failure in midway. If an electricity failure occurs in midway, a great amount of data information may be lost due to lack of timely storage, which seriously affects people's daily work and life. Specifically, in a mains supply system, which load is considered as a critical load and which load is not considered as a critical load is determined by a person skilled in the art according to the foregoing principles and an empirical value, and the identification of a critical load is relative, and a purpose is to reduce, as much as possible, adverse impact resulted from the mains failure. For example, in a mains supply system, a data center is considered as a critical load; but in another mains supply system, a data center is not considered as a critical load.

Moreover, the time T is determined by a person skilled in the art with reference to historical time of a mains failure, and this value is specifically an empirical value. After the critical load and the time T are determined, the preset value may be determined according to the critical load and the time T.

S208. When the quantity of remaining electricity of the backup mains supply system is less than the preset value, control the backup mains supply system to supply electricity to the critical load, and detect whether a quantity of feedable electricity of an electric vehicle of the mains supply system is greater than zero, where the quantity of feedable electricity of the electric vehicle of the mains supply system refers to a maximum quantity of electricity that can be provided for the critical load by all electric vehicles that use mains as a charging source and are being charged.

Specifically, if the quantity of remaining electricity of the backup mains supply system is less than the preset value, detect whether the quantity of feedable electricity of the electric vehicle of the mains supply system is greater than zero; where the quantity of feedable electricity of the electric vehicle of the mains supply system refers to the maximum quantity of electricity that can be provided for the critical load by all electric vehicles that use the mains as a charging source and are being charged, that is, the quantity of feedable electricity of the electric vehicle of the mains supply system refers to a sum of a maximum quantity of electricity that can be provided for the critical load by each electric vehicle that uses the mains as a charging source and is being charged, where the maximum quantity of electricity that can be provided for the critical load by each electric vehicle is a difference between a quantity of electricity that is actually stored by the electric vehicle at present and a minimum quantity of to be consumed electricity preset for the electric vehicle.

S209. If the quantity of feedable electricity of the electric vehicle of the mains supply system is greater than zero, control one or more electric vehicles that can provide a quantity of feedable electricity to supply electricity to the critical load.

That is, when it is detected that the quantity of feedable electricity of the electric vehicle of the mains supply system is greater than zero, the one or more electric vehicles that can provide a quantity of feedable electricity and the backup mains supply system are controlled to jointly supply electricity to the critical load.

Preferably, when it is detected that the quantity of feedable electricity of the electric vehicle of the mains supply system is greater than zero, all the electric vehicles that can provide a quantity of feedable electricity and the backup mains supply system are controlled to jointly supply electricity to the critical load.

It should be noted that, the controlling one or more electric vehicles that can provide a quantity of feedable electricity to supply electricity to the critical load may be controlling the one or more electric vehicles that can provide a quantity of feedable electricity to supply electricity to the critical load, and may also be firstly controlling the one or more electric vehicles that can provide a quantity of feedable electricity to supply electricity to the backup mains supply system, and then controlling the backup mains supply system to supply electricity to the critical load. Either of the two solutions can implement the present invention; however, for ease of implementation based on technologies, the latter is a preferred solution.

It should be noted that, the controlling the backup mains supply system to supply electricity to the critical load may take place before or after the detecting whether a quantity of feedable electricity of an electric vehicle of the mains supply system is greater than zero, or take place concurrently with the detecting action.

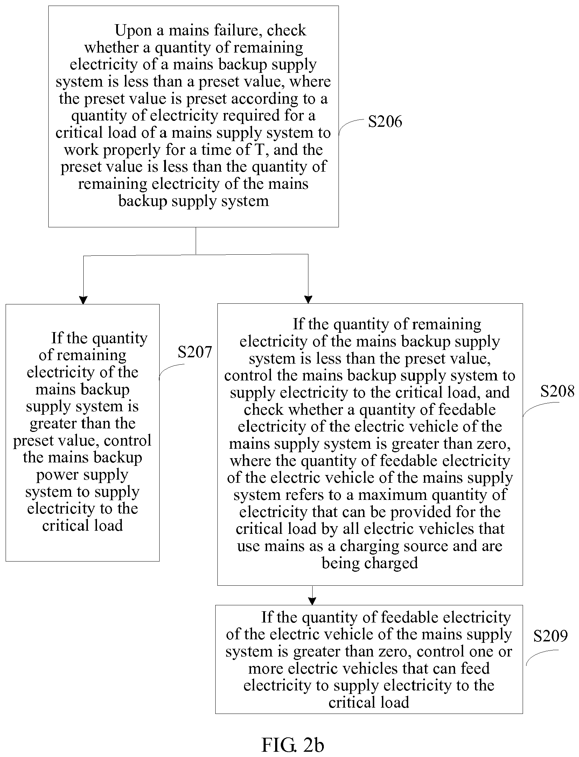

Further, refer to FIG. 2b. Relative to the mains supply method shown in FIG. 2a, a mains supply method shown in FIG. 2b further includes a step S207, where if the quantity of remaining electricity of the backup mains supply system is greater than the preset value, the backup mains supply system is controlled to supply electricity to the critical load.

When the quantity of remaining electricity of the backup mains supply system is greater than the preset value, because the backup mains supply system can independently support the critical load to work for a time T, the electric vehicle of the mains supply system does not need to assist the backup mains supply system in supplying electricity to the critical load to support the critical load to work for the time T.

It may be learned that, according to the mains supply method provided in the present invention, upon a mains failure, it is first detected whether a quantity of backup electricity of a backup mains supply system is greater than a preset value, where if the quantity of backup electricity of the backup mains supply system is greater than or equal to the preset value, the backup mains supply system can independently support a critical load of the backup mains supply system to work for a time T; on the contrary, if the quantity of backup electricity of the backup mains supply system is less than the preset value, the backup mains supply system cannot independently support the critical load of the backup mains supply system to work for the time T, and then it is further detected whether a quantity of feedable electricity of an electric vehicle of a mains supply system is greater than zero, where if the quantity of feedable electricity of the electric vehicle of the mains supply system is greater than zero, the electric vehicle and the backup mains supply system are controlled to jointly supply electricity to the critical load, so that after a mains failure, the critical load is supported to work properly for a time as long as possible and wait for mains to restore. The technical solution provided in the present invention can improve working stability of the critical load to some extent, that is, improve working stability of the mains.

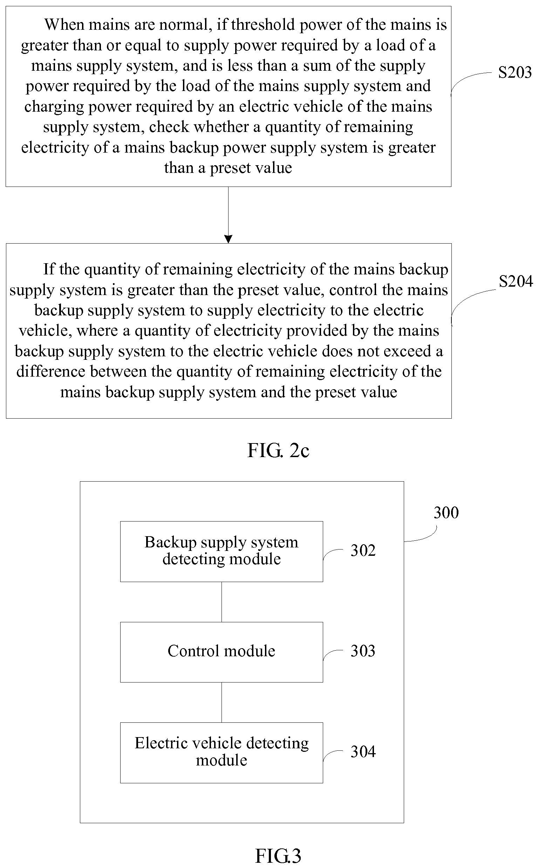

FIG. 2c is a schematic flowchart of mains supply method according to the present invention. Specifically, a charging control method of the electric vehicle includes the following steps:
S203. When the mains work properly, if threshold power of the mains is greater than or equal to electricity supply power required by the load of the mains supply system and is less than a sum of the electricity supply power required by the load of the mains supply system and charging power required by the electric vehicle of the mains supply system, detect whether the quantity of remaining electricity of the backup mains supply system is greater than the preset value.

It should be noted that, the threshold power of the mains refers to maximum power that can be afforded by the mains. The electricity supply power required by the load of the mains supply system refers to a sum of electricity supply power required by each load that uses the mains as an electricity supply source and is working and therefore needs the mains to supply electricity. The charging power required by the electric vehicle of the mains supply system refers to a sum of charging power required by each electric vehicle that uses the mains as a charging source and is being charged, and the charging power required by the electric vehicle of the mains supply system depends on a quantity of current to-be-charged electric vehicles of the mains supply system and charging power required by each to-be-charged electric vehicle. If the charging power of each to-be-charged electric vehicle in all the current to-be-charged electric vehicles in the mains supply system is not high, even if the quantity of the to-be-charged electric vehicles is too large, it is possible that the threshold power of the mains is less than the sum of the electricity supply power required by the load of the mains supply system and the charging power required by the electric vehicle of the mains supply system; or if the quantity of the to-be-charged electric vehicles is not large, but many of the to-be-charged electric vehicles require fast charging, that is, the required charging power is relatively high, the threshold power of the mains may be less than charging power required by an electric vehicle charging system.

Specifically, the threshold power of the mains is greater than or equal to the electricity supply power required by the load of the mains supply system, and is less than the sum of the electricity supply power required by the load of the mains supply system and the charging power required by the electric vehicle of the mains supply system, that is, the mains can satisfy an electricity demand of the load of the mains supply system, but cannot satisfy the electricity demand of the load of the mains supply system and that of the electric vehicle of the mains supply system at the same time. In this case, it is required to detect whether the quantity of remaining electricity of the backup mains supply system is greater than the preset value, so as to determine whether to enable the backup mains supply system, which is configured to compensate, to some extent, for an insufficient part in the supply to the electric vehicle by the mains.

It should be noted that, the preset value is a preset value for enabling the backup mains supply system to supply electricity to the electric vehicle of the mains supply system.

S204. If the quantity of remaining electricity of the backup mains supply system is greater than the preset value, control the backup mains supply system to supply electricity to the one or more electric vehicles, where a quantity of electricity provided by the backup mains supply system to the one or more electric vehicles does not exceed a difference between the quantity of remaining electricity of the backup mains supply system and the preset value.

It should be noted that, a core function of the backup mains supply system is to supply electricity to a critical load of the mains supply system upon a mains failure, so that after the mains failure, the critical load is kept working properly for the time T so as to wait for the mains to restore. Therefore, when the mains is normal, the quantity of remaining electricity of the backup mains supply system must be greater than or equal to the preset value, so as to prevent a mains failure. Based on this, when the mains is normal and the mains can supply only the electricity demand of the load of the mains supply system, but cannot supply the electricity demand of the load of the mains supply system and an electricity supply demand of the electric vehicle of the mains supply system at the same time, it is required to control the backup mains supply system to supply electricity to the electric vehicle, so that when an insufficient part in electricity supply of the mains is compensated to some extent, the quantity of electricity provided by the backup mains supply system to the electric vehicle does not exceed a difference between the quantity of remaining electricity of the backup mains supply system and the preset value.

Further, the mains supply method according to the present invention further includes: if the quantity of remaining electricity of the backup mains supply system is less than or equal to the preset value, reducing a quantity of charging electricity required by the electric vehicle, so that a quantity of supplied electricity of the mains can afford a quantity of supplied electricity required by the load of the mains supply system and the quantity of charging electricity required by the electric vehicle of the mains supply system.

Specifically, if the quantity of remaining electricity of the backup mains supply system is less than or equal to the preset value, that is, the quantity of remaining electricity of the backup mains supply system is not enough to satisfy the quantity of supplied electricity required by the critical load upon the mains failure, the backup mains supply system does not supply electricity to the electric vehicle of the mains supply system, and accordingly, the quantity of charging electricity required by the electric vehicle of the backup mains supply system needs to be reduced, so that the quantity of supplied electricity of the mains can afford the quantity of supplied electricity required by the load of the mains supply system and the quantity of charging electricity required by the electric vehicle of the mains supply system.

It should be noted that, when the mains is normal and the threshold power of the mains is greater than the sum of the charging power required by the load of the mains supply system and the charging power required by the electric vehicle of the mains supply system, the mains supply method further includes: controlling the mains to charge the backup mains supply system, and when the quantity of remaining electricity of the backup mains supply system reaches a maximum quantity of backup electricity of the backup mains supply system, stopping charging (not shown in the figure).

It may be learned that, according to the mains supply method provided by the present invention, when mains are normal, but threshold power of the mains can only satisfy electricity supply power required by loads of a mains supply system, but cannot satisfy a sum of the electricity supply power required by the loads of the mains supply system and charging power required by an electric vehicle of the mains supply system, the solution includes: detecting whether a quantity of remaining electricity of a backup mains supply system is greater than a preset value, and when the quantity of remaining electricity of the backup mains supply system is greater than the preset value, controlling the backup mains supply system to supply electricity to the electric vehicle, so as to compensate, to some extent, for insufficiency of electricity supply provided by the mains, thereby ensuring stability of electricity supply of the mains.

FIG. 3 is a schematic structural diagram of a mains supply apparatus 300 according to the present invention. The mains supply apparatus 300 includes: a backup supply system detecting module 302, a control module 303, and an electric vehicle detecting module 304.

The backup supply system detecting module 302 is configured to detect, upon a mains failure, whether a quantity of remaining electricity of a backup mains supply system is less than a preset value, where the preset value is preset according to a quantity of electricity required for a critical load of a mains supply system to work properly for a time T2, and the preset value is less than a maximum quantity of backup electricity of the backup mains supply system.

An example is used to illustrate a relationship between the detected quantity of remaining electricity of the backup mains supply system, the preset value, and the maximum quantity of backup electricity of the backup mains supply system. For example, a second preset value accounts for 60% of the maximum quantity of backup electricity of the backup mains supply system, and if the detected quantity of remaining electricity of the backup mains supply system accounts for 20% of the maximum quantity of backup electricity of the backup mains supply system, the quantity of remaining electricity of the backup mains supply system is less than the preset value.

It should be noted that, the critical load refers to a load that needs to work uninterruptedly, that cannot have an electricity failure in midway, or whose electricity failure in midway may cause a huge loss, for example, a data center and a server room. These loads need to work uninterruptedly and cannot have an electricity failure in midway. If an electricity failure occurs in midway, a great amount of data information may be lost due to lack of timely storage, which seriously affects people's daily work and life. Specifically, in a mains supply system, which load is considered as a critical load and which load is not considered as a critical load is determined by a person skilled in the art according to the foregoing principles and an empirical value, and the identification of a critical load is relative, and a purpose is to reduce, as much as possible, adverse impact resulted from the mains failure. For example, in a mains supply system, a data center is considered as a critical load; but in another mains supply system, a data center is not considered as a critical load.

Moreover, the time T is determined by a person skilled in the art with reference to historical time of a mains failure, and this value is specifically an empirical value. After the critical load and the time T are determined, the preset value may be determined according to the critical load and the time T.

The control module 303 is configured to control, when the quantity of remaining electricity of the backup mains supply system is less than the preset value, the backup mains supply system to supply electricity to the critical load.

The electric vehicle detecting module 304 is configured to detect, when the quantity of remaining electricity of the backup mains supply system is less than the preset value, whether a quantity of feedable electricity of an electric vehicle of the mains supply system is greater than zero, where the quantity of feedable electricity of the electric vehicle of the mains supply system refers to a maximum quantity of electricity that can be provided for the critical load by all electric vehicles that use mains as a charging source and are being charged.

Specifically, if the quantity of remaining electricity of the backup mains supply system is less than the preset value, detect whether the quantity of feedable electricity of the electric vehicle of the mains supply system is greater than zero; where the quantity of feedable electricity of the electric vehicle of the mains supply system refers to the maximum quantity of electricity that can be provided for the critical load by all electric vehicles that use the mains as a charging source and are being charged, that is, the quantity of feedable electricity of the electric vehicle of the mains supply system refers to a sum of a maximum quantity of electricity that can be provided for the critical load by each electric vehicle that uses the mains as a charging source and is being charged, where the maximum quantity of electricity that can be provided for the critical load by each electric vehicle is a difference between a quantity of electricity that is actually stored by the electric vehicle at present and a minimum quantity of to be consumed electricity preset for the electric vehicle.

The control module 303 is further configured to control, if the quantity of feedable electricity of the electric vehicle of the mains supply system is greater than zero, one or more electric vehicles that can provide a quantity of feedable electricity to supply electricity to the critical load.

That is, when it is detected that the quantity of feedable electricity of the electric vehicle of the mains supply system is greater than zero, the one or more electric vehicles that can provide a quantity of feedable electricity and the backup mains supply system are controlled to jointly supply electricity to the critical load.

Preferably, when it is detected that the quantity of feedable electricity of the electric vehicle of the mains supply system is greater than zero, all the electric vehicles that can provide a quantity of feedable electricity and the backup mains supply system are controlled to jointly supply electricity to the critical load.

That the control module 303 controls the backup mains supply system to supply electricity to the critical load may take place before or after the detecting whether a quantity of feedable electricity of an electric vehicle of the mains supply system is greater than zero, or take place concurrently with the detecting action.

It should be noted that, the control module 303 is specifically configured to control the one or more electric vehicles that can provide a quantity of feedable electricity to supply electricity to the backup mains supply system, and control the backup mains supply system to supply electricity to the critical load; or control the one or more electric vehicles that can provide a quantity of feedable electricity to directly supply electricity to the critical load.

It should be noted that, the control module 303 is further configured to control, when the quantity of remaining electricity of the backup mains supply system is greater than the preset value, the backup mains supply system to supply electricity to the critical load.

It may be learned that, according to the mains supply apparatus provided in the present invention, upon a mains failure, it is first detected whether a quantity of backup electricity of a backup mains supply system is greater than a preset value, where if the quantity of backup electricity of the backup mains supply system is greater than or equal to the preset value, the backup mains supply system can independently support a critical load of the backup mains supply system to work for a time T; on the contrary, if the quantity of backup electricity of the backup mains supply system is less than the preset value, the backup mains supply system cannot independently support the critical load of the backup mains supply system to work for the time T, and then it is further detected whether a quantity of feedable electricity of an electric vehicle of a mains supply system is greater than zero, where if the quantity of feedable electricity of the electric vehicle of the mains supply system is greater than zero, one or more electric vehicles that can provide a quantity of feedable electricity and the backup mains supply system are controlled to jointly supply electricity to the critical load, so that after a mains failure, the critical load is supported to work properly for a time as long as possible and wait for mains to restore. The technical solution provided in the present invention can improve working stability of the critical load to some extent, that is, improve working stability of the mains.

Fig.3 shows the mains supply apparatus 300.

The backup supply system detecting module 302 is further configured to: when the mains works properly, if threshold power of the mains is greater than or equal to electricity supply power required by loads of the mains supply system, and the threshold power of the mains is less than a sum of the electricity supply power required by the loads of the mains supply system and charging power required by the electric vehicle of the mains supply system, detect whether the quantity of remaining electricity of the backup mains supply system is greater than the second preset value.

It should be noted that, the threshold power of the mains refers to maximum power that can be afforded by the mains. The electricity supply power required by the load of the mains supply system refers to a sum of electricity supply power required by each load that uses the mains as an electricity supply source and is working and therefore needs the mains to supply electricity. The charging power required by the electric vehicle of the mains supply system refers to a sum of charging power required by each electric vehicle that uses the mains as a charging source and is being charged, and the charging power required by the electric vehicle of the mains supply system depends on a quantity of current to-be-charged electric vehicles of the mains supply system and charging power required by each to-be-charged electric vehicle. If the charging power of each to-be-charged electric vehicle in all the current to-be-charged electric vehicles in the mains supply system is not high, even if the quantity of the to-be-charged electric vehicles is too large, it is possible that the threshold power of the mains is less than the sum of the electricity supply power required by the load of the mains supply system and the charging power required by the electric vehicle of the mains supply system; or if the quantity of the to-be-charged electric vehicles is not large, but many of the to-be-charged electric vehicles require fast charging, that is, the required charging power is relatively high, the threshold power of the mains may be less than charging power required by an electric vehicle charging system.

Specifically, the threshold power of the mains is greater than or equal to the electricity supply power required by the load of the mains supply system, and is less than the sum of the electricity supply power required by the load of the mains supply system and the charging power required by the electric vehicle of the mains supply system, that is, the mains can satisfy an electricity demand of the load of the mains supply system, but cannot satisfy the electricity demand of the load of the mains supply system and that of the electric vehicle of the mains supply system at the same time. In this case, it is required to detect whether the quantity of remaining electricity of the backup mains supply system is greater than the preset value, so as to determine whether to enable the backup mains supply system, which is configured to compensate, to some extent, for an insufficient part in the supply to the electric vehicle by the mains.

It should be noted that, the preset value is a preset value for enabling the backup mains supply system to supply electricity to the electric vehicle of the mains supply system.

The control module 303 is further configured to control, if the quantity of remaining electricity of the backup mains supply system is greater than the second preset value, the backup mains supply system to supply electricity to the electric vehicle, where a quantity of electricity provided by the backup mains supply system to the electric vehicle does not exceed a difference between the quantity of remaining electricity of the backup mains supply system and the second preset value.

It should be noted that, a core function of the backup mains supply system is to supply electricity to a critical load of the mains supply system upon a mains failure, so that after the mains failure, the critical load is kept working properly for the time T so as to wait for the mains to restore. Therefore, when the mains is normal, the quantity of remaining electricity of the backup mains supply system must be greater than or equal to the preset value, so as to prevent a mains failure. Based on this, when the mains is normal and the mains can supply only the electricity demand of the load of the mains supply system, but cannot supply the electricity demand of the load of the mains supply system and an electricity supply demand of the electric vehicle of the mains supply system at the same time, it is required to control the backup mains supply system to supply electricity to the electric vehicle, so that when an insufficient part in electricity supply of the mains is compensated to some extent, the quantity of electricity provided by the backup mains supply system to the electric vehicle does not exceed a difference between the quantity of remaining electricity of the backup mains supply system and the preset value.

It should be noted that, the control module 303 is further configured to: if the quantity of remaining electricity of the backup mains supply system is less than or equal to the second preset value, reduce a quantity of charging electricity required by the electric vehicle, so that a quantity of supplied electricity of the mains can afford a quantity of supplied electricity required by the load of the mains supply system and the quantity of charging electricity required by the electric vehicle of the mains supply system.

Specifically, if the quantity of remaining electricity of the backup mains supply system is less than or equal to the preset value, that is, the quantity of remaining electricity of the backup mains supply system is not enough to satisfy the quantity of supplied electricity required by the critical load upon the mains failure, the backup mains supply system does not supply electricity to the electric vehicle of the mains supply system, and accordingly, the quantity of charging electricity required by the electric vehicle of the backup mains supply system needs to be reduced, so that the quantity of supplied electricity of the mains can afford the quantity of supplied electricity required by the load of the mains supply system and the quantity of charging electricity required by the electric vehicle of the mains supply system.

It should be noted that, when the mains is normal and the threshold power of the mains is greater than the sum of the charging power required by the load of the mains supply system and the charging power required by the electric vehicle of the mains supply system, the mains supply method further includes: controlling the mains to charge the backup mains supply system, and when the quantity of remaining electricity of the backup mains supply system reaches a maximum quantity of backup electricity of the backup mains supply system, stopping charging (not shown in the figure).

It may be learned that, according to the mains supply apparatus provided by the present invention, when mains are normal, but threshold power of the mains can only satisfy electricity supply power required by loads of a mains supply system, but cannot satisfy a sum of the electricity supply power required by the loads of the mains supply system and charging power required by an electric vehicle of the mains supply system, the solution includes: detecting whether a quantity of remaining electricity of a backup mains supply system is greater than a preset value, and when the quantity of remaining electricity of the backup mains supply system is greater than the preset value, controlling the backup mains supply system to supply electricity to the electric vehicle, so as to compensate, to some extent, for insufficiency of electricity supply provided by the mains, thereby ensuring stability of electricity supply of the mains.

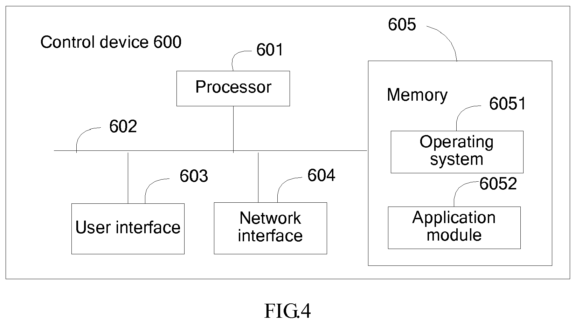

FIG. 4 is a control device 600 provided by the present invention. A control system shown in FIG. 1 may be specifically embodied in the control device 600, where the control device 600 may include at least one processor 601, for example, a CPU, at least one network interface 604, for example, a physical network interface card or another user interface 603, storage memory 605, and at least one communications bus 602.

The communications bus 602 is configured to implement a connection and communication between these components.

The network interface 604 is configured to implement the connection and communication between the control device 600 and a network, for example, the control device 600 connects to devices such as the physical network interface card and/or a physical switch by using the network interface 604, so as to receive data sent by other network devices. Optionally, the user interface 603 may include a display, a keyboard or other clicking devices, for example, a mouse, a trackball (trackball), a touch panel, or a touch screen.

The memory 605 may include a Random Access Memory (RAM for short, Random Access Memory), and may further include a non-volatile memory (non-volatile memory), for example, at least one magnetic disk storage. Optionally, the memory 605 may further include at least one storage apparatus disposed far from the foregoing processor 601. In some implementation manners, the memory 605 stores the following elements: an executable module or data structure, or their subsets, or their extended sets: an operating system 6051, including various system programs, configured to implement various basic services and process hardware-based tasks; and an application module 6052, including various application programs, configured to implement various application services; where the application module 6052 includes but is not limited to various units related to data exchange with a virtual machine, such as an acquiring unit, a determining unit, and a transceiver unit.

Specifically, if the processor 601 receives, by using the network interface 604, data used to indicate a mains failure, then the processor 601 is configured to detect whether a quantity of remaining electricity of a backup mains supply system is less than a preset value, where the preset value is preset according to a quantity of electricity required for a critical load of a mains supply system to work properly for a time T, and the preset value is less than a maximum quantity of backup electricity of the backup mains supply system; when the quantity of remaining electricity of the backup mains supply system is less than the preset value, control the backup mains supply system to supply electricity to the critical load, and detect whether a quantity of feedable electricity of an electric vehicle of the mains supply system is greater than zero, where the quantity of feedable electricity of the electric vehicle of the mains supply system refers to a maximum quantity of electricity that can be provided for the critical load by all electric vehicles that use the mains as a charging source and are being charged; and if the quantity of feedable electricity of the electric vehicle of the mains supply system is greater than zero, control one or more electric vehicles that can provide a quantity of feedable electricity to supply electricity to the critical load.

Further, the processor 601 is further configured to, when the quantity of remaining electricity of the backup mains supply system is greater than or equal to the preset value, control the backup mains supply system to supply electricity to the critical load.

That the processor 601 is further configured to control one or more electric vehicles that can provide a quantity of feedable electricity to supply electricity to the critical load may specifically be that: the processor 601 first controls the one or more electric vehicles that can provide a quantity of feedable electricity to supply electricity to the backup mains supply system, and then controls the backup mains supply system to supply electricity to the critical load; or controls the one or more electric vehicles that can provide a quantity of feedable electricity to directly supply electricity to the critical load.

It should be noted that, if the processor 601 receives data used to indicate that the mains works properly, and if threshold power of the mains is greater than or equal to electricity supply power required by a load of the mains supply system, and the threshold power of the mains is less than a sum of the electricity supply power required by the load of the mains supply system and charging power required by the electric vehicle of the mains supply system, it is detected whether the quantity of remaining electricity of the backup mains supply system is greater than the preset value, where the load of the main electricity supply system includes the critical load; and if the quantity of remaining electricity of the backup mains supply system is greater than the preset value, the backup mains supply system is controlled to supply electricity to the one or more electric vehicles, where a quantity of electricity provided by the backup mains supply system for the one or more electric vehicles does not exceed a difference between the quantity of remaining electricity of the backup mains supply system and the preset value.

Further, the processor 604 is further configured to: if the quantity of remaining electricity of the backup mains supply system is less than or equal to the preset value, reduce a quantity of charging electricity required by the electric vehicle, so that a quantity of supplied electricity of the mains can afford a quantity of supplied electricity required by the load of the mains supply system and the quantity of charging electricity required by the electric vehicle of the mains supply system.

It may be learned that, the control device provided by the present invention is configured to, when a mains failure occurs and a quantity of remaining electricity of a backup mains supply system is insufficient, control an electric vehicle to supply electricity to a critical load, so as to prolong a working time The critical load as much as possible; when mains are normal but the mains can only satisfy a demand of a load and cannot satisfy a charging demand of the electric vehicle at the same time, in a case in which the quantity of remaining electricity maintaining a backup mains supply system is enough for supporting the critical load to work properly for a time T upon a mains failure, control the backup mains supply system to charge the electric vehicle, so as to satisfy the charging demand of the electric vehicle as much as possible. Controlling a mains circuit by using the control device provided by present invention benefits proper resource scheduling and facilitates normal life to the most extent. A person of ordinary skill in the art may be aware that, in combination with the examples disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method and details are not described herein again.

In the present application, it should be understood that the disclosed system, apparatus, and method may be implemented in other manners. For example, the described apparatus is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Apart or all of the units may be selected according to actual needs to achieve the objectives of the solutions of the embodiments.

In addition, functional units in the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium and includes several instructions for instructing a computer device (which may be a personal computer, a server, or a network device) or a processor to perform all or a part of the steps of the methods described in the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A mains supply method, wherein the method comprises:
• upon a mains failure, detecting whether a quantity of remaining electricity of a backup mains supply system is less than a preset value, wherein the preset value is preset according to a quantity of electricity required for a critical load of a mains supply system to work properly for a time T, and the preset value is less than a maximum quantity of backup electricity of the backup mains supply system;
• when the quantity of remaining electricity of the backup mains supply system is less than the preset value, controlling the backup mains supply system to supply electricity to the critical load, and detecting whether a quantity of feedable electricity of an electric vehicle of the mains supply system is greater than zero, wherein the quantity of feedable electricity of the electric vehicle of the mains supply system refers to a maximum quantity of electricity that can be provided for the critical load by all electric vehicles that use mains as a charging source and are being charged; and
• if the quantity of feedable electricity of the electric vehicle of the mains supply system is greater than zero, controlling one or more electric vehicles that can provide a quantity of feedable electricity to supply electricity to the critical load,
**characterized in that**
the method further comprises:
• when the mains works properly, if threshold power of the mains is greater than or equal to electricity supply power required by loads of the mains supply system, and the threshold power of the mains is less than a sum of the electricity supply power required by the loads of the mains supply system and charging power required by the electric vehicle of the mains supply system, detecting whether the quantity of remaining electricity of the backup mains supply system is greater than the preset value, wherein the loads of the mains supply system comprise the critical load and another device that needs the mains to provide electricity supply power, excluding the electric vehicle; and
• if the quantity of remaining electricity of the backup mains supply system is greater than the preset value, controlling the backup mains supply system to supply electricity to the one or more electric vehicles, wherein a quantity of electricity provided by the backup mains supply system to the one or more electric vehicles does not exceed a difference between the quantity of remaining electricity of the backup mains supply system and the preset value.

2. The mains supply method according to claim 1, wherein the method further comprises:
when the quantity of remaining electricity of the backup mains supply system is greater than or equal to the preset value, controlling the backup mains supply system to supply electricity to the critical load.

3. The mains supply method according to claim 1 or 2, wherein the controlling one or more electric vehicles that can provide the quantity of feedable electricity to supply electricity to the critical load comprises:
controlling the one or more electric vehicles that can provide a quantity of feedable electricity to supply electricity to the backup mains supply system, and controlling the backup mains supply system to supply electricity to the critical load; or
controlling the one or more electric vehicles that can provide a quantity of feedable electricity to directly supply electricity to the critical load.

4. The mains supply method according to any one of claims 1 to 3, wherein the method further comprises:
if the quantity of remaining electricity of the backup mains supply system is less than or equal to the preset value, reducing a quantity of charging electricity required by the electric vehicle, so that a quantity of supplied electricity of the mains can afford a quantity of supplied electricity required by the load of the mains supply system and the quantity of charging electricity required by the electric vehicle of the mains supply system.

5. A mains supply apparatus configured and intended to perform any of the methods according to claims 1 - 4.

## Patentansprüche

1. Netzversorgungsverfahren, wobei das Verfahren Folgendes umfasst:
bei einem Netzausfall, Erkennen, ob eine Menge von verbleibender Elektrizität eines Reservenetzversorgungssystems niedriger als ein vorgegebener Wert ist, wobei der vorgegebene Wert gemäß einer Menge von Elektrizität vorgegeben ist, die erforderlich ist, damit eine kritische Last eines Netzversorgungssystems für eine Zeit T ordnungsgemäß arbeitet, und der vorgegebene Wert niedriger als eine maximale Menge von Reserveelektrizität des Reservenetzversorgungssystems ist;
wenn die Menge von verbleibender Elektrizität des Reservenetzversorgungssystems niedriger als der vorgegebene Wert ist, Steuern des Reservenetzversorgungssystems, um Elektrizität zu der kritischen Last zu liefern, und Erkennen, ob eine Menge von zuführbarer Elektrizität eines Elektrofahrzeugs des Netzversorgungssystems größer als null ist, wobei sich die Menge von zuführbarer Elektrizität des Elektrofahrzeugs des Netzversorgungssystems auf eine maximale Menge von Elektrizität bezieht, die durch alle Elektrofahrzeuge, die das Versorgungsnetz als eine Ladequelle verwenden und gerade geladen werden, für die kritische Last bereitgestellt werden kann; und
wenn die Menge von zuführbarer Elektrizität des Elektrofahrzeugs des Netzversorgungssystems größer als null ist, Steuern von einem oder mehreren Elektrofahrzeugen, die eine Menge von zuführbarer Elektrizität bereitstellen können, um Elektrizität zu der kritischen Last zu liefern,
**dadurch gekennzeichnet, dass**
das Verfahren ferner Folgendes umfasst:
wenn das Versorgungsnetz ordnungsgemäß arbeitet, wenn eine Schwellleistung des Versorgungsnetzes größer als die oder gleich der Elektrizitätsversorgungsleistung ist, die durch Lasten des Netzversorgungssystems benötigt wird, und die Schwellleistung des Versorgungsnetzes niedriger als eine Summe der Elektrizitätsversorgungsleistung, die durch die Lasten des Netzversorgungssystems benötigt wird, und von Ladestrom, der durch das Elektrofahrzeug des Netzversorgungssystems benötigt wird, ist, Erkennen, ob die Menge von verbleibender Elektrizität des Reservenetzversorgungssystems größer als der vorgegebene Wert ist, wobei die Lasten des Netzversorgungssystems die kritische Last und eine andere Vorrichtung, die das Versorgungsnetz benötigt, um eine Elektrizitätsversorgungsleistung bereitzustellen, ausschließlich des Elektrofahrzeugs, umfassen; und
wenn die Menge von verbleibender Elektrizität des Reservenetzversorgungssystems größer als der vorgegebene Wert ist, Steuern des Reservenetzversorgungssystems, um Elektrizität zu dem einen oder den mehreren Elektrofahrzeugen zu liefern, wobei eine Menge von Elektrizität, die durch das Reservenetzversorgungssystem für das eine oder die mehreren Elektrofahrzeuge bereitgestellt wird, eine Differenz zwischen der Menge von verbleibender Elektrizität des Reservenetzversorgungssystems und des vorgegebenen Werts nicht überschreitet.

2. Netzversorgungsverfahren nach Anspruch 1, wobei das Verfahren ferner Folgendes umfasst:
wenn die Menge von verbleibender Elektrizität des Reservenetzversorgungssystems größer als der oder gleich dem vorgegebene/n Wert ist, Steuern des Reservenetzversorgungssystems, um Elektrizität zu der kritischen Last zu liefern.

3. Netzversorgungsverfahren nach Anspruch 1 oder 2, wobei das Steuern von einem oder mehreren Elektrofahrzeugen, die die Menge von zuführbarer Elektrizität bereitstellen können, um Elektrizität zu der kritischen Last zu liefern, Folgendes umfasst:
Steuern des einen oder der mehreren Elektrofahrzeuge, die eine Menge von zuführbarer Elektrizität bereitstellen können, um Elektrizität zu dem Reservenetzversorgungssystem zu liefern, und Steuern des Reservenetzversorgungssystems, um Elektrizität zu der kritischen Last zu liefern; oder Steuern des einen oder der mehreren Elektrofahrzeuge, die eine Menge von zuführbarer Elektrizität bereitstellen können, um Elektrizität direkt zu der kritischen Last zu liefern.

4. Netzversorgungsverfahren nach einem der Ansprüche 1 bis 3, wobei das Verfahren ferner Folgendes umfasst:
wenn die Menge von verbleibender Elektrizität des Reservenetzversorgungssystems niedriger als der oder gleich dem vorgegebene/n Wert ist, Reduzieren einer Menge von Ladeelektrizität, die durch das Elektrofahrzeug benötigt wird, sodass eine Menge von gelieferter Elektrizität des Versorgungsnetzes eine Menge von gelieferter Elektrizität, die durch die Last des Netzversorgungssystems benötigt wird, und die Menge von Ladeelektrizität, die durch das Elektrofahrzeug des Netzversorgungssystems benötigt wird, bereitstellen kann.

5. Netzversorgungseinrichtung, die dazu konfiguriert und bestimmt ist, ein beliebiges der Verfahren nach Anspruch 1 - 4 durchzuführen.

## Revendications

1. Procédé d'alimentation secteur, le procédé comprenant :
• lors d'une défaillance de secteur, la détection d'une quantité d'électricité restante d'un système d'alimentation secteur de secours est inférieure ou non à une valeur de consigne, la valeur de consigne étant préfinie conformément à une quantité d'électricité requise pour qu'une charge critique d'un système d'alimentation secteur fonctionne correctement pendant un temps T, et la valeur de consigne étant inférieure à une quantité maximale d'électricité de secours du système d'alimentation secteur de secours ;
• quand la quantité d'électricité restante du système d'alimentation secteur de secours est inférieure à la valeur de consigne, la commande du système d'alimentation secteur de secours pour alimenter en électricité la charge critique, et la détection qu'une quantité d'électricité pouvant être alimentée d'un véhicule électrique du système d'alimentation secteur est supérieure ou non à zéro, la quantité d'électricité pouvant être alimentée du véhicule électrique du système d'alimentation secteur se référant à une quantité d'électricité maximale pouvant être fournie à la charge critique par tous les véhicules électriques qui utilisent le secteur comme source de charge et sont en cours de charge ; et
• si la quantité d'électricité pouvant être alimentée du véhicule électrique du système d'alimentation secteur est supérieure à zéro, la commande d'un ou de plusieurs véhicules électriques qui peuvent fournir une quantité d'électricité pouvant être alimentée pour alimenter en électricité la charge critique,
**caractérisé en ce que**
le procédé comprend en outre :
• quand le secteur fonctionne correctement, si la puissance seuil du secteur est supérieure ou égale à une puissance d'alimentation électrique requise par des charges du système d'alimentation secteur, et la puissance seuil du secteur est inférieure à une somme de la puissance d'alimentation électrique requise par les charges du système d'alimentation secteur et la puissance de charge requise par le véhicule électrique du système d'alimentation secteur, la détection que la quantité d'électricité restante du système d'alimentation secteur de secours est supérieure ou non à la valeur de consigne, dans lequel les charges du système d'alimentation secteur comprennent la charge critique et un autre dispositif qui nécessite le secteur qui fournir une puissance d'alimentation électrique, hormis le véhicule électrique ; et
• si la quantité d'électricité restante du système d'alimentation secteur de secours est supérieure à la valeur de consigne, la commande du système d'alimentation secteur de secours pour alimenter en électricité les un ou plusieurs véhicules électriques, dans lequel une quantité d'électricité fournie par le système d'alimentation secteur de secours aux un ou plusieurs véhicules électriques ne dépasse pas une différence entre la quantité d'électricité restante du système d'alimentation secteur de secours et la valeur de consigne.

2. Procédé d'alimentation secteur selon la revendication 1, le procédé comprenant en outre :
quand la quantité d'électricité restante du système d'alimentation secteur de secours est supérieure ou égale à la valeur de consigne, la commande du système d'alimentation secteur de secours pour alimenter en 'électricité la charge critique.

3. Procédé d'alimentation secteur selon la revendication 1 ou 2, dans lequel la commande d'un ou de plusieurs véhicules électriques qui peuvent fournir la quantité d'électricité pouvant être alimentée pour alimenter en électricité la charge critique comprend :
la commande des un ou plusieurs véhicules électriques qui peuvent fournir une quantité d'électricité pouvant être alimentée pour alimenter en électricité le système d'alimentation secteur de secours, et la commande du système d'alimentation secteur de secours pour alimenter en électricité la charge critique ; ou
la commande des un ou plusieurs véhicules électriques qui peuvent fournir une quantité d'électricité pouvant être alimentée pour alimenter directement en électricité la charge critique.

4. Procédé d'alimentation secteur selon l'une quelconque des revendications 1 à 3, le procédé comprenant en outre :
si la quantité d'électricité restante du système d'alimentation secteur de secours est inférieure ou égale à la valeur de consigne, la réduction d'une quantité d'électricité de charge requise par le véhicule électrique, de telle sorte qu'une quantité d'électricité alimentée du secteur puisse offrir une quantité d'électricité alimentée requise par la charge du système d'alimentation secteur et la quantité d'électricité de charge requise par le véhicule électrique du système d'alimentation secteur.

5. Appareil d'alimentation secteur configuré et conçu pour exécuter l'un quelconque des procédés selon les revendications 1 à 4.
